# EUROPÄISCHE PATENTANMELDUNG

(11) **EP 4 439 022 A1**
(43) Veröffentlichungstag der Anmeldung: **02.10.2024**
(21) Anmeldenummer: 24161041.9
(22) Anmeldetag: 04.03.2024
(51) Int. Cl.: G01G 19/12, G01G 3/12, A01F 15/08, G01G 3/14

(54) **WIEGEEINRICHTUNG, WICKELTISCH UND ERNTEBERGUNGSGERÄT**

(30) Priorität: 31.03.2023 DE 102023108280
(71) Anmelder: Deere & Company, Moline, IL 61265 (US)
(72) Erfinder: BEAUFORT, DAVID M, 68163 Mannheim (DE); BLANCHON, GUILLAUME, 68163 Mannheim (DE); CHAPON, EMMANUEL, 68163 Mannheim (DE)
(74) Vertreter: Stein, Stefan

(57) **Zusammenfassung**

Es wird eine Wiegeeinrichtung (100) zur Erfassung der Gewichtskraft eines Ballens (12) vorgeschlagen. Die Wiegeeinrichtung (100) umfasst einen Lagerbolzen (104) und einen Wiegesensor (102). Der Wiegesensor (102) ist im Lagerbolzen (104) angeordnet und/oder der Wiegesensor (102) ist als Lagerbolzen (104) ausgebildet ist. Die Erfindung betrifft weiter einen Wickeltisch (200) und ein Erntebergungsgerät (1).

## Beschreibung

Die Erfindung betrifft eine Wiegeeinrichtung gemäss dem Oberbegriff des unabhängigen Anspruchs 1, einen Wickeltisch gemäss dem Oberbegriff des unabhängigen Anspruchs 8 und ein Erntebergungsgerät gemäss dem Oberbegriff des unabhängigen Anspruchs 12.

Wiegeeinrichtungen zur Erfassung der Gewichtskraft eines Ballens sind bekannt. EP 3 449 718 A1 und DE 10 241 215 A1 offenbaren Ballenpressen mit einer Wiegeeinrichtung zur Erfassung der Gewichtskraft von gepressten Ballen. DE 10 241 215A1 offenbart eine Wiegeeinrichtung, die eingerichtet ist, die Kraft zu erfassen, die ein Rundballen auf ein sich in der Presskammer der Ballenpresse befindliches Auflageelement ausübt. Hierfür umfasst die Wiegeeinrichtung eine zwischen dem Auflageelement und einem Ballenpressenrahmen angeordnete Messzelle. EP 3 449 718 A1 offenbart eine Wiegeeinrichtung, die in eine Rolle oder Pressrolle integriert ist.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presskammer umfassen. Die Presskammer kann eines oder mehrere Pressmittel umfassen. Die Presskammer kann das von der Aufnahmeeinheit aufgenommene Erntegut aufnehmen und zu einem Ballen pressen. Die Ballenpresse kann ausserdem eine Fördereinheit umfassen. Das von der Aufnahmeeinheit aufgenommene Erntegut kann mit der Fördereinheit, beispielsweise einem Rotor, in die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presskammer wird der Ballen, insbesondere der Rundballen oder der Quaderballen, geformt. Der fertig geformte Ballen kann im Anschluss in der Presskammer oder mit einer Umhüllungseinrichtung ausserhalb der Presskammer mit einem Wickelmaterial oder Hüllmaterial, beispielsweise Netz, Folie oder Bindegarn, umwickelt werden. Der fertig geformte Ballen oder der fertig umwickelte Ballen, kann über eine Auswurfeinheit, beispielsweise eine Auswurfklappe oder ein Heckteil oder eine Heckklappe der Ballenpresse, insbesondere über die mit einer Auswurfeinheit versehene Presskammer, entladen oder ausgeworfen werden.

Nachteile der bekannten Wiegeeinrichtungen zur Erfassung der Gewichtskraft eines Ballens sind, dass diese konstruktiv kompliziert ausgestaltet sind und/oder zusätzliche Bauteile notwendig sind und/oder das Gewicht des Ballens ungenau erfassen bzw. messen.

Der vorliegenden Erfindung liegt daher die Aufgabe zugrunde eine Wiegeeinrichtung, einen Wickeltisch und ein Erntebergungsgerät vorzuschlagen, durch welche die vorgenannten Probleme überwunden werden. Insbesondere sollen eine Wiegeeinrichtung, ein Wickeltisch und ein Erntebergungsgerät vorgeschlagen werden, die konstruktiv einfacher ausgestaltet sind und/oder eine reduzierte Anzahl an Bauteilen aufweisen und/oder eine kompakte Bauform der Wiegeeinrichtung und/oder des Wickeltischs und/oder des Erntebergungsgerät aufweist.

Erfindungsgemäss wird eine Wiegeeinrichtung zur Erfassung der Gewichtskraft eines Ballens, insbesondere an einem Wickeltisch oder einem Erntebergungsgerät, vorgeschlagen. Die Wiegeeinrichtung umfasst einen Lagerbolzen und einen Wiegesensor. Der Wiegesensor ist im Lagerbolzen angeordnet und/oder der Wiegesensor als Lagebolzen ausgebildet. Der Wiegesensor kann insbesondere in den Lagerbolzen integriert sein.

Der Lagerbolzen kann zylinderförmig sein. Der Lagerbolzen kann aber auch jede andere geeignete geometrische Form aufweisen, beispielsweise mehreckig, quadratisch oder dreieckig. Der Lagerbolzen kann hohl sein. Ebenso kann der Lagerbolzen als Hohlzylinder oder als Vollzylinder ausgebildet sein. Der Lagebolzen kann aus Metall oder Kunststoff sein. Der Lagerbolzen kann mit oder ohne Trageflansch oder Schulter zur Abgrenzung der Lagerfläche ausgeführt sein.

Die Wiegeeinrichtung kann zur Erfassung der Gewichtskraft eines Ballens an einem Wickeltisch und/oder an einem Erntebergungsgerät geeignet und/oder angeordnet sein. Die Erfassung der Gewichtskraft des Ballens kann auf diese Weise, insbesondere mit dem Wiegesensor, direkt an einem Bauteil des Wickeltischs und/oder des Erntebergungsgerät, welches der Belastung durch die Gewichtskraft direkt ausgesetzt ist, oder indirekt an einem Bauteil des Wickeltischs und/oder des Erntebergungsgerät erfolgen, an welches die Gewichtskraft übertragen wird. Der Wickeltisch mit der Wiegeeinrichtung kann den Ballen abstützen. Besonders günstig ist es, wenn sich der Ballen zum Zeitpunkt der Erfassung einer Gewichtskraft des Ballen näherungsweise, ausschließlich auf dem Wickeltisch abstützt. Vorteilhafterweise ermöglicht die Anordnung des Wiegensensors im Lagebolzen und/oder die Ausbildung des Wiegesensors als Lagebolzen eine kompakte Ausgestaltung der Wiegeeinrichtung. Darüber hinaus kann vorteilhafterweise die Anzahl an Bauteilen der Wiegeeinrichtung und/oder des Wickeltischs und/oder des Erntebergungsgerät reduziert werden und/oder eine kompakte Bauform der Wiegeeinrichtung und/oder des Wickeltischs und/oder des Erntebergungsgerät erreicht werden. Von Vorteil kann eine direkte Gewichtskraftermittlung erreicht werden.

In Ausgestaltung der Erfindung umfasst die Wiegeeinrichtung einen Trageflansch. Der Lagebolzen ist an einem Ende oder einenends mit dem Trageflansch verbunden, insbesondere drehfest und/oder fest verbunden oder an diesem befestigt. Der Lagerbolzen und der Trageflansch können aber auch einstückig als ein Bauteil ausgebildet sein. Die Oberfläche des Lagerbolzen, insbesondere dessen Mantelfläche, kann zumindest teilweise als Lagerfläche für ein Laufrad ausgebildet. Die Wiegeeinrichtung kann einenends mittels oder mit dem Trägerflansch mit einem oder in einen Rahmen des Wickeltischs oder des Erntebergungsgeräts drehfest verbunden oder aufgenommen werden, so dass eine sichere Verbindung der Wiegeeinrichtung mit dem Wickeltisch und/oder dem Erntebergungsgerät hergestellt werden. Vorteilhafterweise kann dadurch eine kompakte Bauform der Wiegeeinrichtung erreicht werden, insbesondere als Lagerfläche für ein Laufrad. Von Vorteil ist weiter, dass die Wiegeeinrichtung dadurch zwei Funktionen erfüllen kann, einerseits als Sensor zur Ermittlung des Gewichts des Ballens und gleichzeitig als eine Aufhängung oder Lagerung für das Laufrad, sodass der Wickeltisch rollbar oder bewegbar im Erntebergungsgerät angeordnet sein kann.

In Ausgestaltung der Erfindung ist der Wiegesensor als Lagerbolzen und/oder Trageflansch ausgebildet. Ebenso kann der Wiegesensor zumindest teilweise, insbesondere einenends und/oder vollständig, in den Lagerbolzen und/oder den Trageflansch aufgenommen sein. Dadurch wird eine kompakte Ausgestaltung der Wiegeeinrichtung erreicht.

In Ausgestaltung der Erfindung ist der Wiegesensor ein Hall-Sensor oder ein Dehnungsmesssensor. Der Dehnungsmesssensor kann beispielsweise ein Dehnungssensor oder ein Dehnungsmessstreifen oder eine Lichtleitfaser, welche die Faser-Bragg-Gitter messen, sein. Der Dehnungssensor oder Dehnungsmessstreifen können dehnende und/oder stauchende Verformungen messen. Dehnungssensoren oder Dehnungsmessstreifen können schon bei geringen Verformungen ihren elektrischen Widerstand ändern. Eine Verformung (Dehnung) kann dann zur Veränderung des Widerstands des Dehnungssensors oder Dehnungsmessstreifens führen. Ein Hall-Sensor nutzt den Hall-Effekt zur Messung von Magnetfeldern. Der Hall-Sensor kann hierzu wenigstens einen Magneten aufweisen, der sich in Abhängigkeit von einem Belastungszustand, insbesondere der Verformung, der Wiegeeinrichtung oder des Lagerbolzens bewegt. Hierdurch kann sich die magnetische Flussdichte ändern, woraus ein elektrisches Signal resultieren kann, welches beispielsweise an eine Steuereinheit übermittelt werden kann, um dort beispielsweise ausgewertet zu werden und/oder eine oder mehrere Funktion(en) des Wickeltischs oder des Erntebergungsgeräts entsprechend zu steuern und/oder zu regeln. Die Verwendung und/oder Ausbildung als ein Dehnungsmesssensor oder Hall-Sensors vereinfacht eine Kombination einer Lagerungs- mit einer Mess- bzw. Sensorfunktion der Wiegeeinrichtung.

In Ausgestaltung der Erfindung umfasst die Wiegeeinrichtung ein Laufrad oder eine Laufrolle, und das Laufrad ist drehbar am Lagerbolzen, insbesondere der Lagerfläche, gelagert, und bevorzugt mit dem Lagerbolzen verbunden, besonders bevorzugt drehbar am Lagerbolzen befestigt. Die Wiegeeinrichtung kann eines oder mehrere Lager umfassen. Das Lager kann beispielsweise ein Gleitlager oder ein Wälzlager sein. Das Laufrad kann mit dem Lager drehbar am Lagerbolzen, insbesondere der Lagerfläche, gelagert, und bevorzugt mit dem Lagerbolzen verbunden, besonders bevorzugt drehbar am Lagerbolzen befestigt sein. Vorteilhafterweise kann die Wiegeeinrichtung dadurch als Rolle für den Wickeltisch und als Sensor zur Gewichtsmessung, insbesondere für den Wickeltisch und/oder das Erntebergungsgerät, eingesetzt werden. Darüber hinaus kann vorteilhafterweise die Anzahl an Bauteilen der Wiegeeinrichtung und/oder des Wickeltischs und/oder des Erntebergungsgerät reduziert werden und/oder eine kompakte Bauform der Wiegeeinrichtung und/oder des Wickeltischs und/oder des Erntebergungsgerät erreicht werden.

In Ausgestaltung der Erfindung ist der Lagerbolzen als eine Hülse oder Achse oder Welle ausgebildet. Der Lagerbolzen kann insbesondere als hohle Achse oder hohle Welle, in welcher der Wiegesensor angeordnet ist, ausgebildet sein. Die Hülse oder Achse oder Welle und/oder der Wiegesensor sind mit dem Trageflansch verbunden, bevorzugt von dem Trageflansch drehfest aufgenommen und/oder drehfest verbunden und/oder fest verbunden oder an diesem befestigt. Der Trageflansch und die Hülse oder Achse oder Welle können einstückig, also als ein Bauteil ausgebildet sein. Der Wiegesensor kann zumindest teilweise, aber auch vollständig, in der und/oder durch die Hülse oder Achse oder Welle angeordnet sein, insbesondere sich in diese erstrecken. Diese Ausgestaltung ermöglicht vorteilhafterweise eine konstruktiv einfach Ausgestaltung und Bauart.

Die Erfindung betrifft weiter einen Wickeltisch für ein Erntebergungsgerät, umfassend eine Wiegeeinrichtung nach mindestens einem der Ansprüche 1 bis 7. Der Wickeltisch umfasst ein erstes und zweites Rahmenelement und eine erste und zweite Rolle. Die erste und zweite Rolle sind mit jeweils einem Ende mit dem ersten Rahmenelement und einem jeweils anderen Ende mit dem zweiten Rahmenelement verbunden, insbesondere drehbar verbunden oder drehbar befestigt. Der Wickeltisch kann einen oder mehrere die erste und zweite Rolle umschlingende Riemen und/oder Kette(n) umfassen. Ein Ballen kann auf dem Riemen oder der Kette aufliegen. Die Wiegeeinrichtung ist mit dem ersten und/oder zweiten Rahmenelement verbunden, insbesondere mit dem ersten und/oder zweiten Rahmenelement drehfest verbunden oder drehfest befestigt. Ebenso kann der Lagerbolzen mit dem ersten und/oder zweiten Rahmenelement verbunden, insbesondere mit dem ersten und/oder zweiten Rahmenelement drehfest verbunden oder befestigt sein. Im Speziellen kann eine erste Wiegeeinrichtung mit dem ersten Rahmenelement und eine zweite Wiegeeinrichtung mit dem zweiten Rahmenelement verbunden, insbesondere drehfest verbunden oder drehfest befestigt sein. Die erste und zweite Rolle können zwischen dem ersten und zweiten Rahmenelement angeordnet sein. Die Form und Ausgestaltung des ersten und zweiten Rahmenelements können identisch oder verschieden sein. Der Wickeltisch kann eine oder mehrere Wiegeeinrichtungen umfassen. Das erste und zweite Rahmenelement können eine oder mehrere, und insbesondere gleichviel, Wiegeeinrichtungen umfassen, bevorzugt jeweils eine oder zwei oder mehrere Wiegeeinrichtungen umfassen. Die Wiegeeinrichtung kann derart mit dem Wickeltisch verbunden sein, dass der Wickeltisch mit der Wiegeeinrichtung auf einer Schiene des Erntebergungsgeräts rollbar und/oder führbar ist. Der Wickeltisch weist alle oben genannten Vorteile der erfindungsgemässen Wiegeeinrichtung auf. Darüber hinaus kann vorteilhafterweise der Wickeltisch rollbar und/oder führbar ausgeführt sein und gleichzeitig als Sensor zur Erfassung der Gewichtskraft eingesetzt werden.

In Ausgestaltung der Erfindung ist die Wiegeeinrichtung mit dem Trageflansch am ersten und/oder zweiten Rahmenelement befestigt. Im Speziellen kann ein erster Trageflansch der ersten Wiegeeinrichtung mit dem ersten Rahmenelement und ein zweiter Trageflansch der zweiten Wiegeeinrichtung mit dem zweiten Rahmenelement verbunden, insbesondere drehfest verbunden oder drehfest befestigt sein. Ebenso kann sich der Lagerbolzen durch das erste und/oder zweite Rahmenelement erstrecken. Im Speziellen kann sich ein erster Lagerbolzen der ersten Wiegeeinrichtung durch das erste Rahmenelement und ein zweiter Lagerbolzen der zweiten Wiegeeinrichtung durch das zweite Rahmenelement erstrecken.

In Ausgestaltung der Erfindung ist der Trageflansch mit einer Seitenfläche des ersten oder zweiten Rahmenelements verbunden, insbesondere drehfest verbunden oder drehfest befestigt. Im Speziellen kann der erste Trageflansch der ersten Wiegeeinrichtung mit einer ersten Seitenfläche des ersten Rahmenelements verbunden, insbesondere drehfest verbunden oder drehfest befestigt sein, und der zweite Trageflansch der zweiten Wiegeeinrichtung mit einer ersten Seitenfläche des zweiten Rahmenelement verbunden, insbesondere drehfest verbunden oder drehfest befestigt sein. Der Lagerbolzen kann sich durch die Seitenfläche, insbesondere durch eine Öffnung, insbesondere ein Loch oder eine Bohrung, im ersten oder zweiten Rahmenelement, auf eine weitere Seitenfläche des ersten oder zweiten Rahmenelement erstrecken. Im Speziellen kann sich der erste Lagerbolzen der ersten Wiegeeinrichtung durch die erste Seitenfläche der ersten Rahmenelements auf eine zweite Seitenfläche des ersten Rahmenelements erstrecken und der zweite Lagerbolzen der zweiten Wiegeeinrichtung durch die erste Seitenfläche der zweiten Rahmenelements auf eine zweite Seitenfläche des zweiten Rahmenelements erstrecken. Das Laufrad der Wiegeeinrichtung kann auf der weiteren Seitenfläche angeordnet sein. Im Speziellen kann ein erstes Laufrad der ersten Wiegeeinrichtung auf der zweiten Seitenfläche des ersten Rahmenelements und ein zweites Laufrad der zweiten Wiegeeinrichtung auf der zweiten Seitenfläche des zweiten Rahmenelements angeordnet sein. Der Wickeltisch weist alle Vorteile der oben genannten erfindungsgemässen Wiegeeinrichtung auf.

Die Erfindung betrifft ein Erntebergungsgerät, bevorzugt eine Ballenpresse zur Bildung eines Ballens, besonders bevorzugt eine Rundballenpresse zur Bildung von Rundballen, und/oder eine Umhüllungseinrichtung zur Umhüllung des Ballen mit einem Hüllmaterial, beispielsweise in der Art eines Netzes oder einer Folie. Das Erntebergungsgerät umfasst eine Wiegeeinrichtung nach einem der Ansprüche 1 bis 7 und/oder einen Wickeltisch nach einem der Ansprüche 8 bis 11. Die Wiegeeinrichtung und/oder der Wickeltisch kann am Erntebergungsgerät eingesetzt werden. Das Erntebergungsgerät kann eine oder mehrere Wiegeeinrichtung(en) und/oder einen Wickeltisch aufweisen. Die Ballenpresse kann eine Quaderballenpresse zum Bilden von Quaderballen oder eine Rundballenpresse zum Bilden von Rundballen aus Erntegut sein. Die Ballenpresse kann einen Ballenpressenrahmen umfassen. Ebenso kann die Ballenpresse in ein Zugfahrzeug integriert sein, also die Kombination als selbstfahrende Ballenpresse ausgebildet sein. Die Umhüllungseinrichtung kann mit der Ballenpresse verbunden sein. Die Umhüllungseinrichtung kann der Ballenpresse nachgelagert sein. Die Ballenpresse und/oder die Umhüllungseinrichtung können durch Räder auf dem Erdboden abgestützt sein. Die Ballenpresse kann ein Ballensystem zum Formen von Ballen, insbesondere in einer Pressphase, umfassen. Die Ballenpresse, insbesondere das Ballensystem, kann die Aufnahmeeinheit, insbesondere eine Pick-up, zum Aufnehmen von Erntegut umfassen, insbesondere zur Aufnahme des Ernteguts aus einem Schwad. Die Ballenpresse, insbesondere das Ballensystem, kann auch eine Presskammer umfassen. Die Presskammern kann eines oder mehrere Pressmitteln umfassen. Die Ballenpresse kann ausserdem eine Fördereinheit, beispielsweise einen Rotor oder ein Förderband, umfassen. Mit dem Ballensystem, insbesondere mit der Presskammer, kann der Ballen, insbesondere in einer Pressphase, geformt werden. Die Ballenpresse, insbesondere das Ballensystem, kann eine Wickeleinrichtung zum Umwickeln des fertig geformten Ballens mit einem Wickelmaterial oder Hüllmaterial, beispielsweise Netz, Folie oder Bindegarn, umfassen. Der fertig geformte Ballen kann, insbesondere in der Presskammer, mit dem Hüllmaterial umwickelt werden. Die Ballenpresse kann eine Auswurfeinheit, beispielsweise eine Auswurfklappe oder ein Heckteil oder eine Heckklappe der Ballenpresse, umfassen. Der fertig geformte Ballen oder der fertig umwickelte Ballen, kann über die Auswurfeinheit der Ballenpresse, insbesondere über die mit der Auswurfeinheit versehene Presskammer, entladen oder ausgeworfen werden. Die Ballenpresse kann mit einer größenveränderlichen Presskammer bzw. als Ballenpresse mit variabler Presskammer ausgebildet sein. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Presskammer kann ebenfalls am Ballenpressenrahmen angeordnet, bevorzugt mit diesem verbunden und/oder an diesem befestigt sein. Die Wiegeeinrichtung kann an oder in einer Presskammer der Ballenpresse oder an eine solche angrenzend angeordnet, bevorzugt mit der Ballenpresse, beispielsweise dem Ballenpressenrahmen, verbunden oder an diesem befestigt sein. Die Wiegeeinrichtung kann aber auch an der Umhüllungseinrichtung, insbesondere dem Wickeltisch der Umhüllungseinrichtung, angeordnet, bevorzugt verbunden und/oder befestigt sein. Das Erntebergungsgerät kann eine oder mehrere Schienen umfassen. Der Wickeltisch und/oder die Wiegeeinrichtung, bevorzugt die mit dem Wickeltisch verbundene Wiegeeinrichtung, besonders bevorzugt das Laufrad der Wiegeeinrichtung, kann auf der Schiene drehbar angeordnet sein, insbesondere derart auf der Schiene drehbar angeordnet oder gelagert sein, dass der Wickeltisch, insbesondere mit einem Aktuator, zwischen einer ersten Position, beispielsweise an oder in der Presskammer der Ballenpresse oder an einer Transportvorrichtung, und einer zweite Position bewegbar ist, beispielsweise einer Umhüllungsposition, in welcher der Ballen in der Umhüllungseinrichtung umwickelbar ist. Der Aktuator kann beispielsweise in Form eines Hydraulikzylinders oder Pneumatikzylinders oder Hebekissens oder Gewindetriebs oder Zahnstangentriebs oder Elektrozylinders ausgebildet sein. Ebenso kann der Wickeltisch eine oder mehrere Wiegeeinrichtung aufweisen, bevorzugt zwei oder vier Wiegeeinrichtungen. Die Wiegeeinrichtung kann aber auch an der Transportvorrichtung angeordnet, bevorzugt mit der Transportvorrichtung verbunden und/oder befestigt sein. Mit der Transportvorrichtung kann ein Ballen zwischen einer dritten Position, beispielsweise an oder in einer Presskammer der Ballenpresse, in eine vierte Position bewegt werden, beispielsweise auf oder in eine Umhüllungseinrichtung, insbesondere auf oder an den Wickeltisch. Das Erntebergungsgerät kann als ein Kombinationsgerät ausgebildet sein, also beispielsweise eine Ballenpresse mit einer Presskammer und eine Umhüllungseinrichtung umfassen. Das Kombinationsgerät kann an oder in der Presskammer und/oder an oder in der Umhüllungseinrichtung, insbesondere dem Wickeltisch, eine Wiegeeinrichtung umfassen. Bei dem Ballen kann es sich um einen Ballen aus Erntegut handeln. Es ist aber auch denkbar, dass sich der Ballen aus Müll, Papier, Stoff bzw. Gewebe, Baumwolle, Tabak etc. zusammensetzt.

Der oder die Wiegeeinrichtung, insbesondere der oder die Wiegesensoren, und/oder der oder die Aktuatoren können mit einer Steuereinheit betreibbar, bevorzugt ansteuerbar und/oder steuerbar und/oder regelbar, besonders bevorzugt einstellbar und/oder verstellbar sein. Die Steuereinheit kann der Ballenpresse zugeordnet sein. Im Speziellen kann, wenn die Ballenpresse Teil einer Kombination aus einem Zugfahrzeug, beispielsweise ein Traktor oder Schlepper ist, die Steuereinheit dem Zugfahrzeug oder beiden gemeinsam zugeordnet und/oder an oder in diesen angeordnet sein. Die Kombination, insbesondere das Zugfahrzeug oder die Ballenpresse oder beide gemeinsam, kann bzw. können die Steuereinheit umfassen. Ebenso kann die Steuereinheit als Zugfahrzeugsteuereinheit und/oder Ballenpressensteuereinheit ausgebildet sein. Die Steuereinheit kann als ein elektronisches Modul, ein eingebettetes System, eine Recheneinheit, ein Computer, als ein Modul zum Steuern und/oder Regeln der Ballenpresse, bevorzugt der Kombination, also des Zugfahrzeugs und/oder der Ballenpresse, ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Ballenpresse, insbesondere der Kombination erforderlich sind. Das Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Kombination und die erforderlichen Aufgaben zur Steuerung und/oder Regelung des Betriebs der Kombination zu steuern und/oder zu regeln und/oder auszuführen. Die Steuereinheit kann mit der oder den Wiegeeinrichtung, insbesondere dem oder den Wiegesensoren, und/oder dem oder den Aktuatoren verbunden sein, bevorzugt signalverbunden und/oder signalübertragend und/oder datenleitend verbunden sein. Unter einer signalverbundenen und/oder signalübertragenden und/oder datenleitenden Verbindung kann dabei unter anderem verstanden werden, dass ein Austausch von Signalen und/oder Daten zwischen den verbundenen Bauteilen stattfindet. Signale und/oder Daten können beispielsweise von der Steuereinheit empfangen und versendet werden und/oder verarbeitet und/oder bearbeitet werden. Die Verbindung zwischen der Steuereinheit und der oder den Wiegeeinrichtungen, insbesondere dem oder den Wiegesensoren, und/oder dem oder den Aktuatoren kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Die Steuereinheit kann mit einer in einer Kabine des Zugfahrzeugs angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels eines erfindungsgemässen Erntebergungsgeräts, und
- Fig. 2: eine schematische Darstellung eines ersten Ausführungsbeispiels einer erfindungsgemässen Wiegeeinrichtung, und
- Fig. 3: eine schematische Darstellungen eines zweiten Ausführungsbeispiels der erfindungsgemässen Wiegeeinrichtung, und
- Fig. 4: eine schematische Darstellungen eines dritten Ausführungsbeispiels der erfindungsgemässen Wiegeeinrichtung, und
- Fig. 5: eine schematische Darstellungen eines vierten Ausführungsbeispiels der erfindungsgemässen Wiegeeinrichtung, und
- Fig. 6: eine schematische Darstellungen eines fünften Ausführungsbeispiels der erfindungsgemässen Wiegeeinrichtung, und
- Fig. 7: eine schematische Darstellungen eines ersten Ausführungsbeispiels des erfindungsgemässen Wickeltischs, und
- Fig. 8: eine schematische vergrösserte Darstellungen des ersten Ausführungsbeispiels des erfindungsgemässen Wickeltischs, und
- Fig. 9: eine schematische vergrösserte Schnittdarstellungen des ersten Ausführungsbeispiels des erfindungsgemässen Wickeltischs, und
- Fig. 10: eine schematische Darstellungen eines zweiten Ausführungsbeispiels des erfindungsgemässen Erntebergungsgeräts.

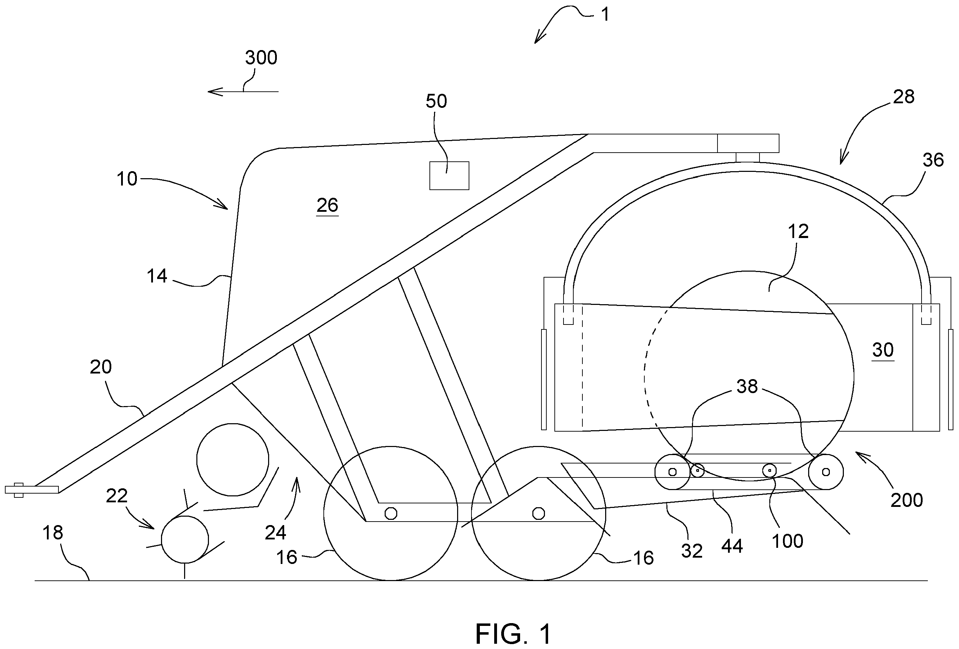

Figur 1 zeigt eine schematische Darstellung eines ersten Ausführungsbeispiels eines erfindungsgemässen Erntebergungsgeräts 1. Das Erntebergungsgerät 1 ist als Ballenpresse 10, insbesondere als Rundballenpresse, zum Pressen eines Ballens 12, insbesondere eines Rundballens, mit einer Umhüllungseinrichtung 28 ausgebildet. Die Ballenpresse 10 weist einen Ballenpressenrahmen 14 auf, der sich mittels Rädern 16 auf einem Untergrund 18 abstützt und das mittels einer Deichsel 20 an ein nicht gezeigtes Zugfahrzeug, z. B. einen Traktor oder Schlepper, verbindbar ist. An einer bezogen auf eine Vorwärtsfahrtrichtung 300 vorderen, unteren Seite des Ballenpressenrahmens 14 befindet sich in bekannter Weise eine Aufnahmeeinheit 22 zur Aufnahme und Zufuhr von Erntegut, die geschnittenes Erntegut über einen Einlass 24 in eine Presskammer 26 fördert.

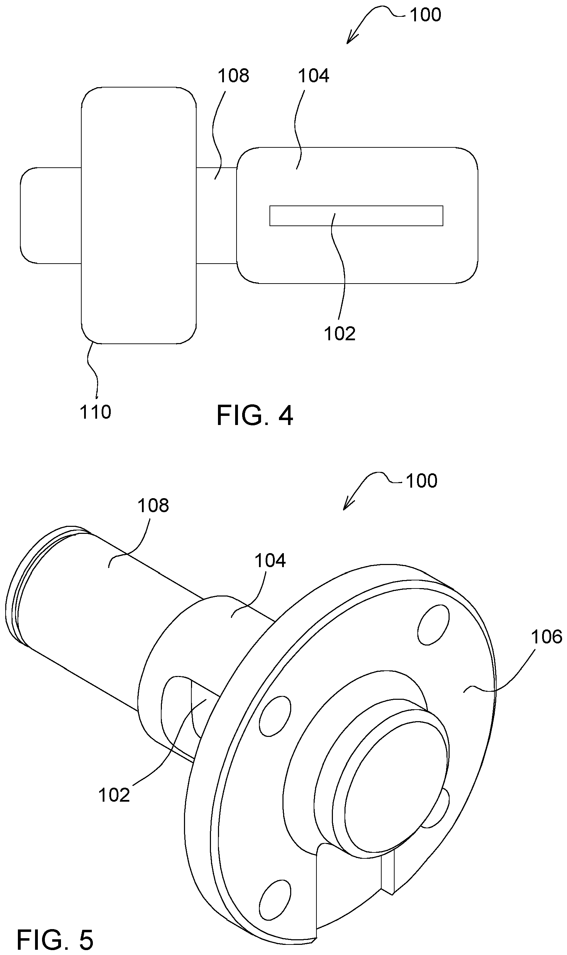

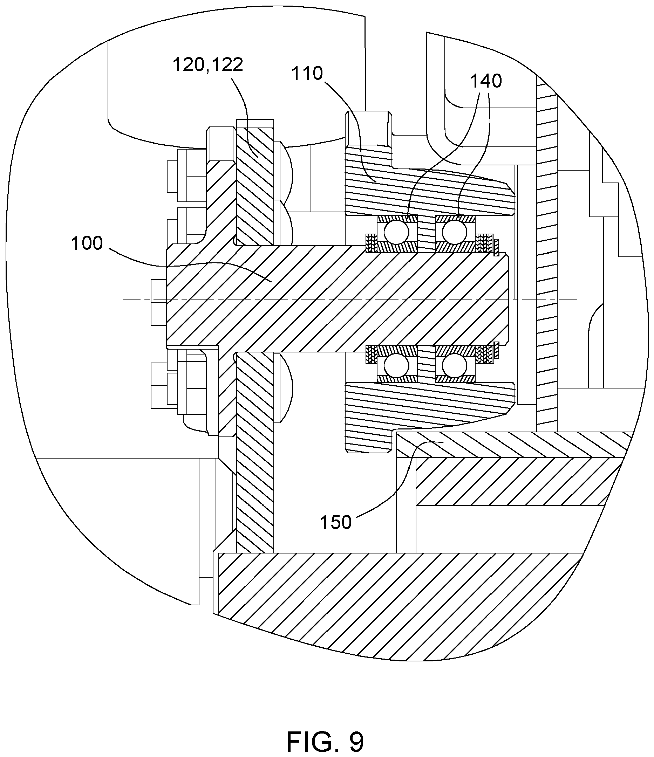

Zusätzlich weist das Erntebergungsgerät 1 eine Umhüllungseinrichtung 28 zur Umhüllung eines in der Ballenpresse 10 gebildeten Ballens 12 mit einem Hüllmaterial 30 auf, beispielsweise einer Folie oder ein Netz oder eine Schnur. Die Umhüllungseinrichtung 28 weist einen Rahmen 32, einen Wickeltisch 200, zur Aufnahme des zu umhüllenden Ballens 16 sowie Wickelarme 36, die zur Umhüllung des Ballens 12 mit dem Hüllmaterial 30 mittels eines nicht gezeigten, geeigneten Antriebs in Bewegung versetzt werden können, auf. Der Wickeltisch 200 umfasst die Wiegeeinrichtung 100. Das Erntebergungsgerät 1 umfasst eine oder mehrere Schienen 150 (siehe Figur 9). Die Wiegeeinrichtung 100, insbesondere ein Laufrad 110 (siehe bspw. Figur 4) der Wiegeeinrichtung 100, ist auf der Schiene 150 derart drehbar angeordnet, und/oder insbesondere der Wickeltisch 200 mit dem Laufrad 110 bewegbar auf der Schiene 150 gelagert, dass der Wickeltisch 200 zwischen einer ersten und einer zweite Position, insbesondere einer Umhüllungsposition, bewegbar ist.

Der Wickeltisch 200 wiederum weist zwei Rollen 38 auf, welche den Ballen 12 während eines Überführens des Ballens 12 von der Presskammer 26 in seine Umhüllungsposition auf der Umhüllungseinrichtung 28 und/oder während der Umhüllung des Ballens 12 mit Wickel- oder Hüllmaterial 30 abstützen bzw. hierzu mit einem um die Rollen 38 geschlungenen Riemen 44 zusammenwirken. Die Rollen 38 können in bekannter Art aus einem metallischen Werkstoff, beispielsweise in der Art eines Blechs, oder aus einem anderen geeigneten Material, beispielsweise einem Kunststoff, gefertigt sein.

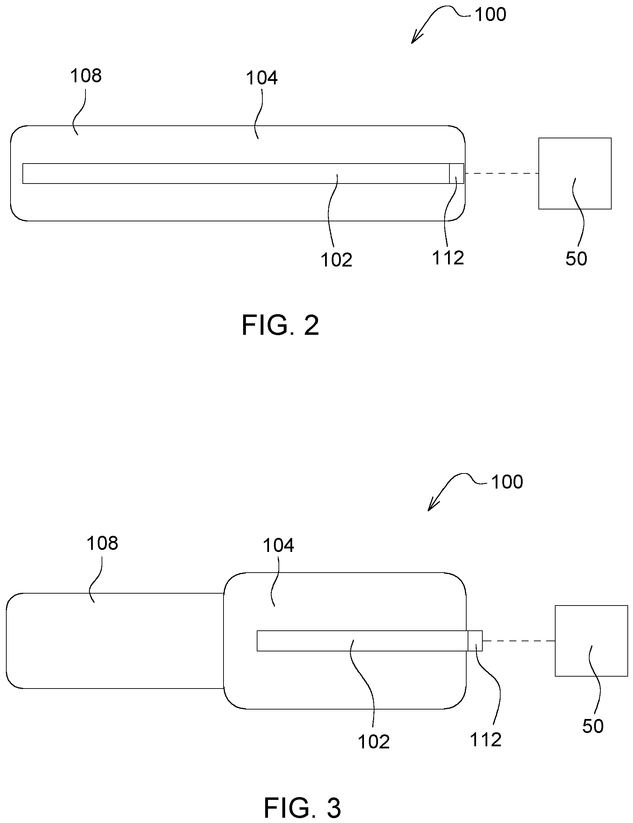

Figur 2 zeigt eine schematische Darstellung des ersten Ausführungsbeispiels der erfindungsgemässen Wiegeeinrichtung 100. Die in Figur 2 gezeigte Wiegeeinrichtung 100 entspricht im Wesentlichen der in Figur 1 gezeigten Wiegeeinrichtung 100, sodass im Folgenden lediglich auf Details und/oder Unterschiede eingegangen wird. Das in Figur 1 gezeigte Erntebergungsgerät 1 und/oder der Wickeltisch 200 können die Wiegeeinrichtung 100 gemäss Figur 2 umfassen. Die Wiegeeinrichtung 100 ist zur Erfassung der Gewichtskraft eines Ballens ausgebildet. Die Wiegeeinrichtung 100 umfasst einen Lagerbolzen 104 und einen Wiegesensor 102. Der Lagerbolzen 104 ist vorliegend zylinderförmig ausgebildet, kann aber auch jede beliebige andere geeignete Form aufweisen. Wesentlich für die erfindungsgemässe Wiegeeinrichtung 100 ist, dass der Wiegesensor 102 im Lagerbolzen 104 angeordnet ist und/oder der Wiegesensor 102 als Lagerbolzen 104 ausgebildet ist. Der Wiegesensor 102 ist ein Dehnungsmesssensor, kann aber auch ein Hall-Sensor sein. Die Wiegeeinrichtung 100 weist eine Oberfläche des Lagerbolzen 104 auf, die zumindest teilweise als Lagerfläche 108 für ein Laufrad 110 (siehe bspw. Figur 4) ausgebildet ist. Der Wiegesensor 102 ist zumindest teilweise, vorliegend vollständig, in den Lagerbolzen 104 aufgenommen. In einem Kopfbereich des Lagerbolzens 104, also der Bereich, an welchem auch ein Trageflansch 106 angeordnet sein kann, kann ein Aufnehmer 112 vorgesehen sein, der die vom Wiegesensor 102 aufgenommene Werte an eine Steuereinheit 50 übermitteln kann.

Figur 3 zeigt eine schematische Darstellungen eines zweiten Ausführungsbeispiels der erfindungsgemässen Wiegeeinrichtung 100. Die in Figur 3 gezeigte Wiegeeinrichtung 100 entspricht im Wesentlichen der in den Figuren 1 und 2 gezeigten Wiegeeinrichtung 100, sodass im Folgenden lediglich auf Details und/oder Unterschiede eingegangen wird. Das in Figur 1 gezeigte Erntebergungsgerät 1 und/oder der Wickeltisch 200 können die Wiegeeinrichtung 100 gemäss Figur 3 umfassen. Bei der in Figur 3 gezeigten Wiegeeinrichtung ist der Wiegesensor 102 teilweise in den Lagerbolzen 104 aufgenommen. Ausserdem weisst der Lagebolzen eine Schulter auf#.

Figur 4 zeigt eine schematische Darstellungen eines dritten Ausführungsbeispiels der erfindungsgemässen Wiegeeinrichtung 100. Die in Figur 4 gezeigte Wiegeeinrichtung 100 entspricht im Wesentlichen der in den Figuren 1 bis 3 gezeigten Wiegeeinrichtung 100, sodass im Folgenden lediglich auf Details und/oder Unterschiede eingegangen wird. Das in Figur 1 gezeigte Erntebergungsgerät 1 und/oder der Wickeltisch 200 können die Wiegeeinrichtung 100 gemäss Figur 4 umfassen. Die Wiegeeinrichtung 100 umfasst ein Laufrad 110. Das Laufrad 110 ist drehbar am Lagerbolzen 104 auf der Lagerfläche 108 gelagert.

Figur 5 zeigt eine schematische Darstellungen eines vierten Ausführungsbeispiels der erfindungsgemässen Wiegeeinrichtung 100. Die in Figur 5 gezeigte Wiegeeinrichtung 100 entspricht im Wesentlichen der in den Figuren 1 bis 4 gezeigten Wiegeeinrichtung 100, sodass im Folgenden lediglich auf Details und/oder Unterschiede eingegangen wird. Das in Figur 1 gezeigte Erntebergungsgerät 1 und/oder der Wickeltisch 200 können die Wiegeeinrichtung 100 gemäss Figur 5 umfassen. Die Wiegeeinrichtung 100 umfasst einen Trageflansch 106. Der Lagebolzen 104 ist an einem Ende mit dem Trageflansch 106 verbunden. Der Wiegesensor 102 kann als Lagerbolzen 104 und/oder Trageflansch 106 ausgebildet sein. Vorliegende ist der Wiegesensor 102 zumindest teilweise in den Lagerbolzen 104 und den Trageflansch 106 aufgenommen.

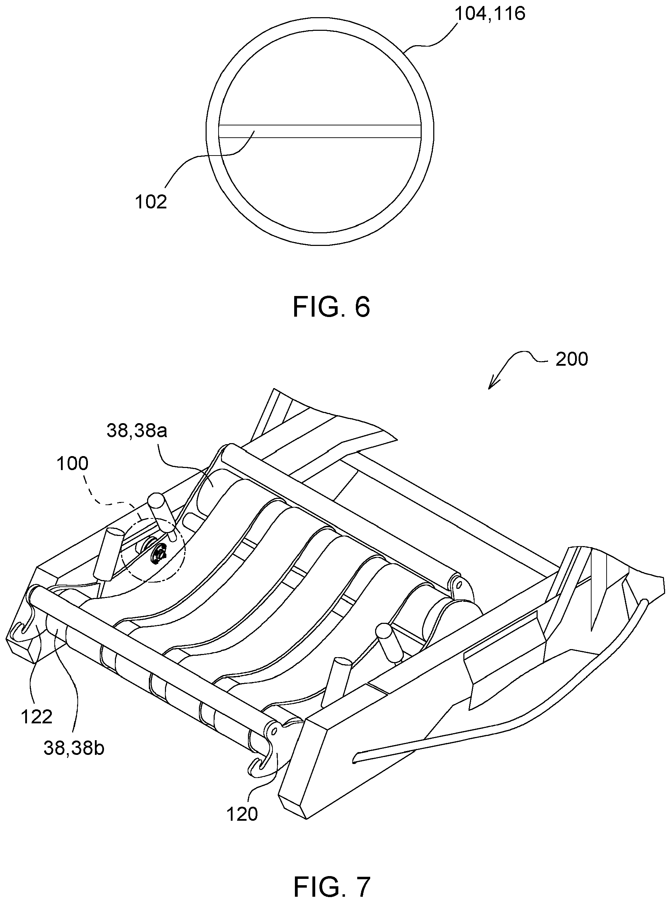

Figur 6 zeigt eine schematische Darstellungen eines fünften Ausführungsbeispiels der erfindungsgemässen Wiegeeinrichtung 100. Die in Figur 6 gezeigte Wiegeeinrichtung 100 entspricht im Wesentlichen der in den Figuren 1 bis 5 gezeigten Wiegeeinrichtung 100, sodass im Folgenden lediglich auf Details und/oder Unterschiede eingegangen wird. Das in Figur 1 gezeigte Erntebergungsgerät 1 und/oder der Wickeltisch 200 können die Wiegeeinrichtung 100 gemäss Figur 6 umfassen. Der Lagerbolzen 104 ist als eine Hülse 116 ausgebildet, kann aber auch als Achse oder Welle ausgebildet sein. Die Hülse 116 und/oder der Wiegesensor 102 können mit dem Trageflansch 106 verbunden sein. Der Wiegesensor 102 erstreckt sich zumindest teilweise durch die Hülse 116.

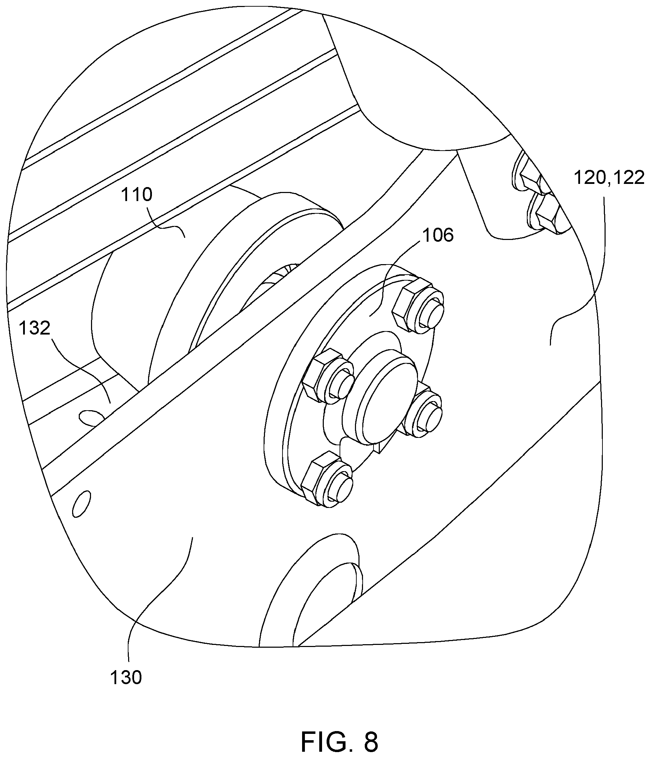

Figur 7 zeigt eine schematische Darstellungen eines ersten Ausführungsbeispiels des erfindungsgemässen Wickeltischs 200. Der in Figur 7 gezeigte Wickeltisch 200 entspricht im Wesentlichen dem in Figur 1 gezeigten Wickeltisch 200, sodass im Folgenden lediglich auf Details und/oder Unterschiede eingegangen wird. Der in Figur 7 gezeigte Wickeltisch 200 kann die Wiegeeinrichtung 100 gemäss der Figuren 1 bis 6 umfassen. Das in Figur 1 gezeigte Erntebergungsgerät 1 kann den Wickeltisch 200 gemäss Figur 7 umfassen. Der erfindungsgemässe Wickeltisch 200 für ein Erntebergungsgerät 1, umfasst die Wiegeeinrichtung 100. Die Details der Wiegeeinrichtung 100 sowie der Anordnung und Befestigung der Wiegeeinrichtung 100 am Wickeltisch 200 sind in Figur 8 gezeigt. Der Wickeltisch 200 umfasst ein erstes und zweites Rahmenelement 120, 122 und eine erste und zweite Rolle 38a, 38b. Die erste und zweite Rolle 38a, 38b sind mit jeweils einem Ende mit dem ersten Rahmenelement 120 und einem jeweils anderen Ende mit dem zweiten Rahmenelement 122 verbunden, insbesondere drehbar befestigt. Die Wiegeeinrichtung 100 ist mit dem zweiten Rahmenelement 122 verbunden, insbesondere befestigt und/oder drehfest verbunden. Die Wiegeeinrichtung 100 kann aber auch mit dem ersten Rahmenelement 120 verbunden, insbesondere befestigt und/oder drehfest verbunden sein. Im Speziellen können an jedem Rahmenelement 120, 122 jeweils zwei Wiegeeinrichtungen 100 vorgesehen sein.

Figur 8 zeigt eine schematische vergrösserte Darstellungen des ersten Ausführungsbeispiels des erfindungsgemässen Wickeltischs 200. Der in Figur 8 gezeigte Wickeltisch 200 entspricht im Wesentlichen dem in den Figuren 1 und 7 gezeigten Wickeltisch 200, sodass im Folgenden lediglich auf Details und/oder Unterschiede eingegangen wird. Der in Figur 8 gezeigte Wickeltisch 200 kann die Wiegeeinrichtung 100 gemäss der Figuren 1 bis 7 umfassen. Das in Figur 1 gezeigte Erntebergungsgerät 1 kann den Wickeltisch 200 gemäss Figur 8 umfassen. Die Wiegeeinrichtung 100 ist mit dem Trageflansch 106 am ersten oder zweiten Rahmenelement 120, 122 befestigt, vorliegend mit Schrauben. Ebenso kann der Trageflansch anstatt mit Schrauben auch mit Zapfen oder ähnlichem am ersten und/oder zweiten Rahmenelement befestigt sein. Der Lagerbolzen 104 erstreckt sich durch das erste oder zweite Rahmenelement 120, 122 und trägt auf der Lagerfläche 108 das Laufrad 110. Der Trageflansch 106 ist mit einer Seitenfläche 130 des ersten oder zweiten Rahmenelements 120, 122 verbunden, insbesondere drehfest befestigt und/oder lösbar befestigt. Der Lagerbolzen 104 erstreckt sich durch die Seitenfläche 130, insbesondere durch eine Öffnung, insbesondere eine Bohrung, im ersten oder zweiten Rahmenelements 120, 122 auf eine weitere Seitenfläche 132 des ersten oder zweiten Rahmenelement 120, 122.

Figur 9 zeigt eine schematische vergrösserte Schnittdarstellungen des ersten Ausführungsbeispiels des erfindungsgemässen Wickeltischs 200. Der in Figur 9 gezeigte Wickeltisch 200 entspricht im Wesentlichen dem in den Figuren 1 und 7 und 8 gezeigten Wickeltisch 200, sodass im Folgenden lediglich auf Details und/oder Unterschiede eingegangen wird. Der in Figur 8 gezeigte Wickeltisch 200 kann die Wiegeeinrichtung 100 gemäss der Figuren 1 bis 8 umfassen. Das in Figur 1 gezeigte Erntebergungsgerät 1 kann den Wickeltisch 200 gemäss Figur 9 umfassen. Figur 9 zeigt die Schiene 150, auf der der Wickeltisch zwischen einer ersten und einer zweite Position bewegbar ist. Ein dem Trägerflansch 106 gegenüberliegender Endbereich des Lagerbolzens 104 trägt ein Lager 140, vorliegende zwei Lager 140, in der Art eines Wälz- bzw. Kugellagers. Das Lager 140 ist auf der Lagefläche 108 des Lagebolzens 104 angeordnet, insbesondere auf dem Lagebolzen 104 derart angeordnet, dass das Laufrad 110 um den Lagerbolzen 104 drehen kann und sich das Laufrad 110 über das Lager 140 auf dem Lagerbolzen 104 abstützt.

Zur Bestimmung der Gewichtskraft eines durch die Rollen 38, 38a, 38b bzw. durch den um diese geschlungenen Riemen 44 aufgenommenen bzw. abgestützten Ballen 12, ist die Wiegeeinrichtung 100 zur Erfassung der Gewichtskraft des Ballens 12 ausgebildet. Die Wiegeeinrichtung 100 erfasst eine auf den Wickeltisch wirkende und über die Rahmenelemente 120, 122 an die Wiegeeinrichtung übertragene und wirkende Gewichtskraft bzw. Last, insbesondere eines Ballens 12 auf dem Wickeltisch 200.

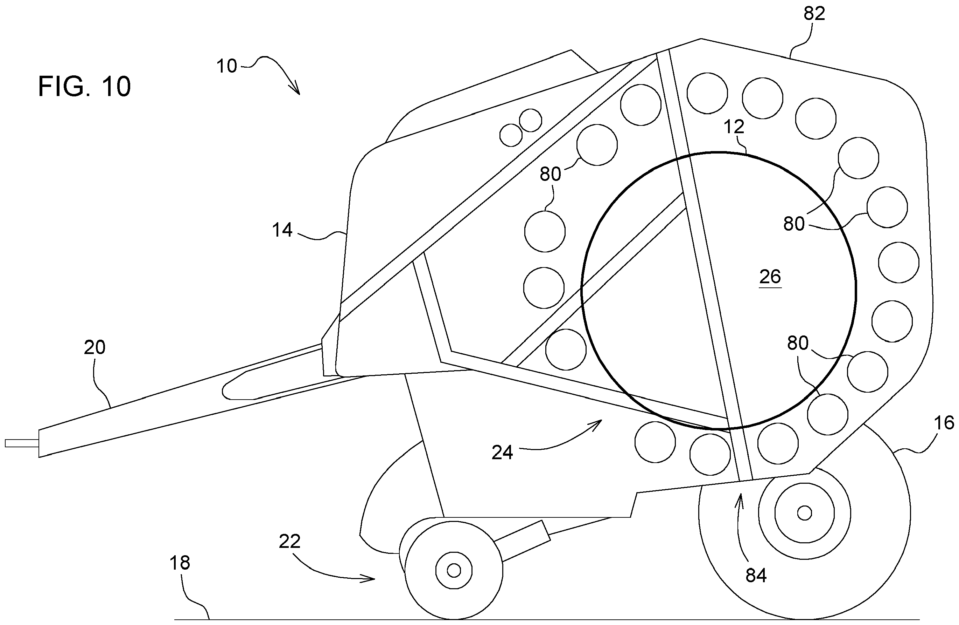

Figur 10 zeigt eine schematische Darstellungen eines zweiten Ausführungsbeispiels des erfindungsgemässen Erntebergungsgeräts 1. Das in Figur 10 gezeigte Erntebergungsgerät 1 entspricht im Wesentlichen dem in Figur 1 gezeigten Erntebergungsgerät 1, sodass im Folgenden lediglich auf Details und/oder Unterschiede eingegangen wird. Das in Figur 10 gezeigte Erntebergungsgerät 1 kann die Wiegeeinrichtung 100 und/oder den Wickeltisch 200 gemäss der Figuren 1 bis 9 umfassen. Die Presskammer 26 der Ballenpresse 10 ist größenunveränderlich ausgebildet und die Ballenpresse 10 weist eine Vielzahl zueinander parallel verlaufender Pressrollen 80 (exemplarisch wurden hier nur einige wenige Rollen 80 mit dem Bezugszeichen 80 versehen), die während der Bildung eines Ballens 12 auf einem Kreisbogen gelegen sind, und von denen wenigstens einige angetrieben sind. Die Pressrollen 80 dienen neben einem Pressen und einer Formgebung, insbesondere auch einer Rotationserzeugung oder einer Rotationserhaltung des in der Presskammer 26 angeordneten Ballens 12. In einem bezogen auf die Vorwärtsfahrtrichtung rückwärtigen Bereich des Erntebergungsgeräts 1 ist darüber hinaus die Auswurfeinheit 82 vorgesehen, die zum Auswerfen eines Ballens 12 aus der Presskammer 26 eine Öffnung 84 freigeben kann. Zur Verdeutlichung wird die Auswurfeinheit 82 in der Zeichnung in einer leicht geöffneten Stellung gezeigt. Das Erntebergungsgerät 1 kann auch in der Art einer Rundballenpresse mit einer variablen Presskammer 26 ausgebildet sein.

## Patentansprüche

1. Wiegeeinrichtung zur Erfassung der Gewichtskraft eines Ballens (12), umfassend einen Lagerbolzen (104) und einen Wiegesensor (102), **dadurch gekennzeichnet, dass** der Wiegesensor (102) im Lagerbolzen (104) angeordnet ist und/oder der Wiegesensor (102) als Lagerbolzen (104) ausgebildet ist.

2. Wiegeeinrichtung nach Anspruch 1, **dadurch gekennzeichnet, dass** die Wiegeeinrichtung (100) einen Trageflansch (106) umfasst, und der Lagebolzen (104) an einem Ende mit dem Trageflansch (106) verbunden ist und/oder die Oberfläche des Lagerbolzen (104) zumindest teilweise als Lagerfläche (108) für ein Laufrad (110) ausgebildet ist.

3. Wiegeeinrichtung nach Anspruch 1 oder 2, **dadurch gekennzeichnet, dass** der Wiegesensor (102) als Lagerbolzen (104) und/oder Trageflansch (106) ausgebildet ist.

4. Wiegeeinrichtung nach mindestens einem der vorangehenden Ansprüche, **dadurch gekennzeichnet, dass** der Wiegesensor (102) zumindest teilweise in den Lagerbolzen (104) und/oder den Trageflansch (106) aufgenommen ist.

5. Wiegeeinrichtung nach mindestens einem der vorangehenden Ansprüche, **dadurch gekennzeichnet, dass** der Wiegesensor (102) ein Hall-Sensor oder ein Dehnungsmesssensor ist.

6. Wiegeeinrichtung nach mindestens einem der vorangehenden Ansprüche, **dadurch gekennzeichnet, dass** die Wiegeeinrichtung (100) ein Laufrad (110) umfasst, und das Laufrad (110) drehbar am Lagerbolzen (104) gelagert ist.

7. Wiegeeinrichtung nach mindestens einem der vorangehenden, **dadurch gekennzeichnet, dass** der Lagerbolzen (104) als eine Hülse (116) oder Achse oder Welle ausgebildet ist, und/oder die Hülse (116) oder Achse oder Welle und/oder der Wiegesensor (102) mit dem Trageflansch (106) verbunden ist, wobei der Wiegesensor (102) zumindest teilweise in der Hülse (116) oder Achse oder Welle angeordnet ist.

8. Wickeltisch für ein Erntebergungsgerät (1), umfassend eine Wiegeeinrichtung (100) nach mindestens einem der Ansprüche 1 bis 7.

9. Wickeltisch nach Anspruch 8, **dadurch gekennzeichnet, dass** der Wickeltisch (200) ein erstes und zweites Rahmenelement (120, 122) und eine erste und zweite Rolle (38, 38a, 38b) umfasst, wobei die erste und zweite Rolle (38, 38a, 38b) mit jeweils einem Ende mit dem ersten Rahmenelement (120, 122) und einem jeweils anderen Ende mit dem zweiten Rahmenelement (120, 122) verbunden ist, wobei die Wiegeeinrichtung (100) mit dem ersten und/oder zweiten Rahmenelement (120, 122) verbunden ist.

10. Wickeltisch nach Anspruch 8 oder 9, **dadurch gekennzeichnet, dass** die Wiegeeinrichtung (100) mit dem Trageflansch (106) am ersten oder zweiten Rahmenelement (120, 122) befestigt ist und/oder sich der Lagerbolzen (104) durch das erste oder zweite Rahmenelement (120, 122) erstreckt.

11. Wickeltisch nach mindestens einem der Ansprüche 8 bis 10, **dadurch gekennzeichnet, dass** der Trageflansch (106) mit einer Seitenfläche (130) des ersten oder zweiten Rahmenelements (120, 122) verbunden ist und/oder sich der Lagerbolzen (104) durch eine Seitenfläche (130) des ersten oder zweiten Rahmenelements (120, 122) auf eine weitere Seitenfläche (132) des ersten oder zweiten Rahmenelement (120, 122) erstreckt.

12. Erntebergungsgerät, bevorzugt eine Ballenpresse (10) zur Bildung eines Ballens (12) und/oder eine Umhüllungseinrichtung (28) zur Umhüllung des Ballens (12) mit einem Hüllmaterial (30), mit wenigstens einer Wiegeeinrichtung (100) nach einem der Ansprüche 1 bis 7 und/oder einem Wickeltisch (200) nach einem der Ansprüche 8 bis 11.

13. Erntebergungsgerät nach Anspruch 12, **dadurch gekennzeichnet, dass** das Erntebergungsgerät (1) eine Schiene (150) umfasst, wobei die Wiegeeinrichtung (100), insbesondere das Laufrad (110) der Wiegeeinrichtung (100), derart auf der Schiene drehbar angeordnet ist, dass der Wickeltisch (200) zwischen einer ersten und einer zweite Position bewegbar ist.
